(19)

Europäisches Patentamt
European Patent Office
Office européen des brevets

(11) **EP 2 448 315 B1**

(12) **EUROPEAN PATENT SPECIFICATION**

(45) Date of publication and mention
of the grant of the patent:
**25.06.2014 Bulletin 2014/26**

(51) Int Cl.:
*H04W 24/08* (2009.01)          *H04L 29/08* (2006.01)
*H04W 4/02* (2009.01)          *H04W 68/00* (2009.01)
*H04W 64/00* (2009.01)

(21) Application number: **11186616.6**

(22) Date of filing: **26.10.2011**

(54) **Estimating the number of mobile stations in a geographical area**

Abschätzung der Anzahl von Mobilstationen in einem geographischen Gebiet

Estimation du nombre de stations mobiles dans une région géographique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.10.2010 IT MI20102025**

(43) Date of publication of application:
**02.05.2012 Bulletin 2012/18**

(73) Proprietors:
• **Vodafone IP Licensing Limited
Newbury, Berkshire RG14 2FN (GB)**
• **Vodafone Omnitel N.V.
Amsterdam (NL)**
Designated Contracting States:
**IT**

(72) Inventors:
• **Pellegrino, Nicola
20038 Seregno (MB) (IT)**
• **Di Cugno, Francesco
76125 Trani (BT) (IT)**

(74) Representative: **Bonvicini, Davide et al
Perani & Partners
Patent
Piazza San Babila, 5
20122 Milano (MI) (IT)**

(56) References cited:
**EP-A1- 1 377 094          WO-A1-2005/079101
WO-A1-2010/090570**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a method for estimating the number of mobile stations within a geographic area according to the preamble of Claim 1.

As is known, in a telecommunications network, Operations and Maintenance Centres (OMCs) are present which provide for monitoring some network operating parameters such as, for example, the total number of originated calls, the number of terminated calls, the number of originated SMSs and the number of terminated SMSs within an area served by a Base Transceiver Station (BTS). Such information is stored and can be used for statistical purposes regarding the use of the network over a determined period of time.

GB 2 392 348 for example describes a method to determine the number of mobile stations within a mobile radio cell or within a determined geographic area by the sending of a request to the mobile stations and of a corresponding response from them. In this case, assuming that each mobile station incorporates a random number generator, the method provides for arranging a controller assigned to send a threshold signal to all the stations present in the region in question (cell). By setting reception only at the mobile stations which have a threshold value less than a predetermined value, it is possible to statistically determine the number of mobile stations served by a cell.

WO 2006 079252 describes a simulation method for determining the presence of mobile stations within a geographic area and the corresponding number of mobile stations present at a given moment. In particular, the method provides for the checking of a parameter stored in the mobile station and the storing of this parameter in a base transceiver station simulator. The base transceiver station simulator provides for subsequently transmitting a signal to the mobile station as a function of the fixed parameter. The mobile station thus connects to the base transceiver station while the base transceiver station confirms the presence of the mobile station as a function of the received parameter. Thus, it is possible to monitor the connections between terminal and base transceiver station for the purposes of measuring the number of mobile stations registered in the network.

Although the solutions listed above provide for determining the number of mobile stations within a geographic area, they use intrusive systems which alter the regular operation of the mobile station, sometimes requiring the use of hardware additional to the mobile communications network.

Another solution is indicated in WO 2010 090570 A1, wherein a method and an apparatus for measurement of active user devices per quality-of-service class basis are disclosed. The devices are activated on the uplink of a wireless communication system and the number of mobile terminals with buffered data for transmission to a base station is estimated based on received buffer status reports.

Moreover, EP 1 377 094 A1 discloses a system and a method for estimating traffic rate of calls in wireless personal communication environment in order to define the allocated resources.

From the above-described, there emerges a need for making available a method for determining the number of mobile stations using a passive system, allowing the distribution of mobile stations in a geographic area to be estimated without the need for interacting directly with the mobile station.

An object of the present invention is therefore to provide a method for estimating the number of mobile stations within a geographic area having characteristics so as to meet the abovementioned requirements and at the same time to address the drawbacks which have been mentioned with reference to the prior art.

This object is achieved by a method for estimating the number of mobile stations within a geographic area according to Claim 1.

According to a further aspect, the invention relates to a system for estimating the number of mobile stations within a geographic area according to Claim 7.

Other features and advantages of the method and system for estimating the number of mobile stations according to the present invention will emerge from the description cited below of its preferred example embodiments, given by way of indication and in a non-limiting manner, with reference to the appended drawings, in which:

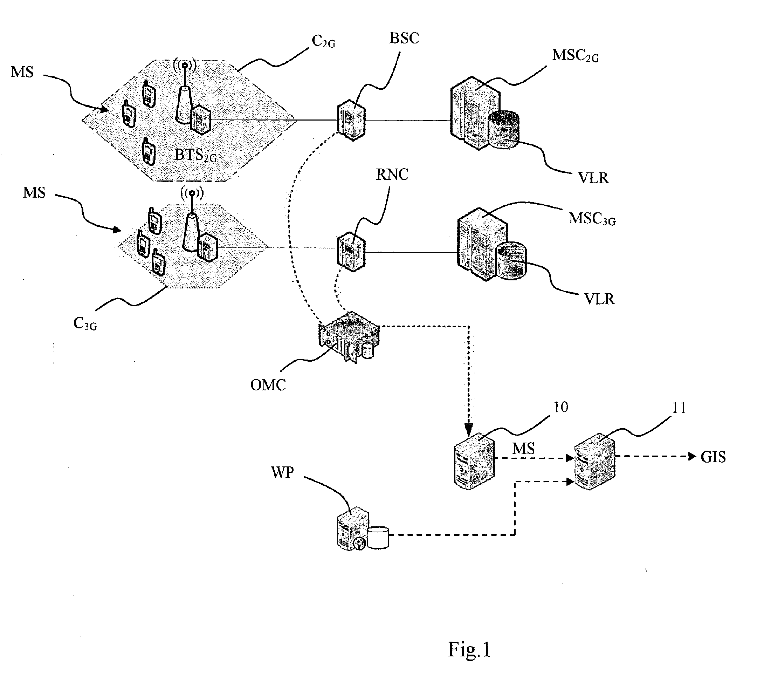

- Figure 1 represents an example of an architecture able to implement the method for estimating the number of mobile stations MS within a geographic area A according to the invention.

With reference to the appended drawings, the reference 1 indicates in an overall sense an example of an architecture able to implement the method for estimating the number of mobile stations MS within a geographic area A according to the invention.

The geographic area A in question comprises a part of the region served by at least one Base Transceiver Station (BTS) able to transmit mobile radio signals in a portion of the geographic area A, called cell C, and able to transmit/receive radio signals to/from a plurality of mobile stations MS. For example, a geographic area can comprise one or more Cells C.

It is worth noting that each BTS can transmit mobile radio signals in 2G (GSM, EDGE, etc), 3G (CDMA, UMTS, HSDPA, etc) and/or 4G (LTE, HSOPA, etc) wireless technology.

As illustrated in the example of Figure 1, depending on the 2G or 3G technology telecommunications service provided, each BTS can be connected, respectively, to at least one Base Station Controller (BSC) or to at least one Radio Network Controller (RNC).

Hereafter in the present description, the following components will be used:

- Base Station Controller (BSC): component to control each BTS which transmits mobile radio signals in 2G wireless technology (in particular GSM).
- Radio Network Controller (RNC): component to control each BTS which transmits mobile radio signals in 3G wireless technology (in particular UMTS).

- Mobile Switching Centre (MSC): primary node responsible for all call-related, SMS-related and/or data-related services on mobile stations MS in a telecommunications network,
- Home Location Register (HLR): central database containing all the registration information of each mobile station MS. In particular, each HLR unambiguously stores each SIM card associated with the corresponding mobile stations MS registered and authorised to use the various services provided by the telecommunications network operator,
- Cell Identifier (CI): identification number of a Cell,
- Location Area Identifier (LAI): identification number of a Location Area LA distributed in a geographic area A,
- Cell Global Identifier (CGI) which forms the unambiguous identification of a cell within the entire mobile radio network and is given by the concatenation of the Location Area Identifier LAI and the Cell Identifier CI,
- Location Update (LU): process by which a mobile station MS provides its own position within the mobile radio network; the Location Update LU can be determined also when a mobile station MS switches off or on, or following a Handover,
- Periodic Location Update (PLU): process by which a mobile station MS provides at Location Update intervals $T_{LU}$ (generally every two hours) its own position within the mobile radio network,
- Handover (HO): condition of movement of a mobile station MS during a call from one cell C to an adjacent cell. In particular, Incoming Handover (IHO) is defined as a condition of movement of a mobile station MS to a cell C, while Outgoing Handover (OHO) is defined as a condition of movement of a mobile station MS from a cell C;
- Visitor Location Register (VLR): database which stores the information of all the mobile stations MS which at a given moment are connected to the Mobile Switching Centre that serves them,
- Network Troubleshooting Tool (NTT): component for taking and monitoring data from the telecommunications network,
- Cancel Location (CL): procedure which allows the profile of a mobile station MS to be updated in a Visitor Location Register VLR following a Location Update LU.

For the purposes of being able to estimate the number of mobile stations MS within a geographic area A, or within a portion of a geographic area such as for example a Cell C, served by a 2G technology telecommunications service, the method according to the invention must use at least one Operations and Maintenance Centre OMC. The Operations and Maintenance Centre OMC is able to measure and store, at every time interval $T_k$, for each cell C, at least one of the following network operating parameters:

- the total number of originated calls $N_{M\text{-}OC}$,
- the total number of terminated calls $N_{M\text{-}OC}$,
- the total number of originated SMSs $N_{SMS\text{-}MO}$,
- the total number of terminated SMSs $N_{SMS\text{-}MT}$,
- the total number of Location Updates $N_{LU}$,
- the total number of Incoming Handovers $N_{IHO}$,
- the total number of Outgoing Handovers $N_{OHO}$.

It is worth noting that the network operating parameters represent, in essence, the activities of each mobile station MS which take place within a determined geographic area A or a portion of a geographic area served by at least one Base Transceiver Station BTS in the time interval $T_k$.

As illustrated in the example of Figure 1, at least one OMC can be connected to a Base Station Controller BSC and/or a Radio Network Controller RNC. Thus, the Operations and Maintenance Centre OMC is capable of storing and providing information regarding the mobile stations MS present at a determined instant in the geographic area A.

To this end, hereafter in the present description, the term Idle Mode (IM) indicates a condition in which a mobile station MS does not make/receive calls and does not generate SMSs. In particular, for each cell C, at every time interval $T_k$, the number of mobile stations in Idle Mode $N_{IMk,C}$ can be determined by the sum of the number of Location Updates $N_{LU,K}$ generated and the number of Incoming Handovers to the cell C $N_{IHO,k}$ minus the sum of the number of Outgoing Handovers $N_{OHO,k}$ and the number of Cancel Locations generated $N_{CL,k}$:

$$[1] \qquad N_{IMk,C} \cong N_{LU,K} + N_{IHO,k} - N_{OHO,k} - N_{CL,k}.$$

According to a first embodiment, the method provides for processing, by means of, for example, first processing means 10, at least one of the network operating parameters (listed above) for the purposes of calculating the number of mobile stations MS present within a cell C during a time interval $T_k$.

In one version, provision is made for introducing a probability parameter $\sigma$ proportional to the amount of users in Idle Mode IM present within a cell C. The probability parameter $\sigma$ represents the probability that a user stays within a given cell C, for example for a time interval $T_k$ greater than or equal to 1 hour. The probability parameter $\sigma$ can be determined by means of the following relationship:

$$[1.1] \qquad \sigma = \dot{E}\left[\frac{T_{HO-MOC}}{T_{MOC}}\right]$$

where $E[]$ represents the average value of the ratio between $T_{HO-MOC}$. representing the total number of mobile stations MS within a geographic area A moving during a call from a cell C to an adjacent cell, and $T_{MOC}$, representing the total number of mobile stations MS within the geographic area A. It is to be noted that $T_{HO-MOC}$ and $T_{MOC}$ are values that can be made available by interrogating the Network Troubleshooting Tool NTT. From that stated above, it follows that the number of mobile stations MS in Idle Mode $N_{IMk,C}$ can therefore be calculated by means of the following relationship:

$$[2] \qquad N_{IM_{k,C}} \cong \sigma_{k-1} \cdot N_{IM,k-1} + N_{LU,k} + N_{IHO,k} - N_{OHO,k} - N_{CL,k}$$

Considering the network operating parameters and the assumptions listed above, it is to be noted that the number of mobile stations $MS_{k,C}$ to be estimated turns out to be a function of the total number of originated calls $N_{M-OC}$, the number of terminated calls $N_{M-TC}$, the total number of originated SMSs $N_{SMS-MO}$, the total number of terminated SMSs $N_{SMS-MT}$ and the total number of mobile stations MS in Idle Mode $N_{IM}$:

$$[3] \qquad MS_{k,C} = f(N_{M-OC_{k,C}}, N_{M-TC_{k,C}}, N_{SMS-MO_{k,C}}, N_{SMS-MT_{k,C}}, N_{IM_{k,C}}).$$

By considering the functions relating to each network parameter to be independent, it is possible to express [3] as a linear combination of functions:

$$[4] \qquad MS_{k,C} = \alpha^i\left(N_{M-OC_{k,C}}\right) + \alpha^{ii}\left(N_{M-TC_{k,C}}\right) + \beta^i\left(N_{SMS-MO_{k,C}}\right) + \beta^{ii}\left(N_{SMS-MT_{k,C}}\right) + \gamma\left(N_{IM_{k,C}}\right)$$

where $\alpha^i$, $\alpha^{ii}$, $\beta^i$, $\beta^{ii}$ $\beta^{ii}$ and $\gamma^i$ are functions that determine, respectively, the total number of mobile stations MS which have originated calls in the time interval between $T_{k-1}$ and $T_k$ as a function of the total number of calls $N_{M-OC}$, the total number of mobile stations MS which have received calls in the time interval between $T_{k-1}$ and $T_k$ as a function of the total number of calls $N_{M-TC}$, the total number of mobile stations MS which have originated SMSs in the time interval between $T_{k-1}$ and $T_k$ as a function of the total number of originated SMSs $N_{SMS-MO}$, the total number of mobile stations MS which have received SMSs in the time interval between $T_{k-1}$ and $T_k$ as a function of the number of terminated SMSs $N_{SMS-MT}$ and the total number of mobile stations MS which in the time interval between $T_{k-1}$ and $T_k$ have remained in Idle Mode IM.

It is to be noted that using for example a Bayesian approach, the network operating parameters $N_{M-OC}$, $N_{M-TC}$, $N_{SMS-MO}$, $N_{SMS-MT}$ and $N_{IM}$ can be obtained from the probability distribution a posteriori. For example, assuming that the activities of each mobile station MS are cyclic in a particular day of the week in a time interval $T_k = 1$ hour, it is possible to evaluate all the average values E[] for every hour and for every day of the week. Therefore, [4] can be approximated by calculating the number of mobile stations are MS as follows:

$$MS_{k,C} \approx p_{M-OC,i}(k) \cdot \left[ \sum_{i=1}^{n} p_{M-OC,i}(k) \right]^{-1} \cdot N_{M-OC_{k,C}} + p_{M-TC,i}(k) \cdot \left[ \sum_{i=1}^{m} p_{M-TC,i}(k) \right]^{-1} \cdot N_{M-TC_{k,C}} +$$

$$[5] \qquad + p_{SMS-MO,i}(k) \cdot \left[ \sum_{i=1}^{s} p_{SMS-MO,i}(k) \right]^{-1} \cdot N_{SMS-MO_{k,C}} + p_{SMS-MT,i}(k) \cdot \left[ \sum_{i=2}^{w} p_{SMS-MT,i}(k) \right]^{-1} \cdot N_{SMS-MT_{k,C}}$$

$$+ p_0(k) \cdot \frac{N_{IM_{k,C}}}{p_0(k)},$$

where, within the geographic area A, $p_{M-OC,i}(k)$ is the probability that a user originates at least $i$ calls in the time interval $T_k$, $p_{M-TC,i}(k)$ is the probability that a user receives at least $i$ calls in the time interval $T_k$, $p_{SMS-MO,i}(k)$ is the probability that a user originates at least $i$ SMSs in the time interval $T_k$, $p_{SMS-MT,i(k)}$ is the probability that a user receives at least $i$ SMSs in the time interval $T_k$ and $p_0(k)$ is the probability that a user is in Idle Mode IM in the time interval $T_k$.

The value corresponding to each upper limit $n$, $m$, $s$ and $w$ of the summations associated with formula [5] can be considered to be a function of the probabilities of the associated network operating parameters. This entails introducing an appropriate approximation in formula [5] which provides its practical resolution.

Since the abovementioned network operating parameters can be modelled, for example, by Poisson processes, the total number of originated calls $N_{M-OC}$ (the same applies for the total number of terminated calls $N_{M-TC}$, the total number of originated SMSs $N_{SMS-MO}$, the total number of terminated SMSs $N_{SMS-MT}$, the total number of Location Updates $N_{LU}$, the total number of Incoming Handovers $N_{IHO}$, and the total number of Outgoing Handovers $N_{OHO}$) exhibits an exponential type probability density.

Consequently, it is possible to choose the values $n$, $m$, $s$ and $w$ so as to cover a preset percentage of activities associated with each mobile station MS.

In one version, the values $n$, $m$, $s$ and $w$ are chosen so as to cover a preset percentage of activities associated with each mobile station MS.

For example, it has been confirmed that the probability that each mobile station MS, in a time interval $T_k$ = 1 hour, has originated a number of calls between 1 and 40 is 95%. Therefore, it is possible to set a value of $n$, $m$, $s$ and $w$, corresponding for example to 40, in order to check that 90% and 95% of the originated/terminated activities of each user terminal is confirmed.

In one version, it is possible to choose a value $n$, $m$, $s$ or $w$ between 0 and 50.

In one version, it is possible to choose a value $n$, $m$, $s$ or $w$ between 1 and 40.

It is to be noted that the use of mobile telephony services can vary during the day. It is therefore necessary to consider that the probability function of each network operating parameter depends on the time interval $T_k$.

In one version, the method according to the invention provides for the use of a software algorithm to calculate the number of mobile stations MS in a geographic area A. To this end, as anticipated above, assuming that the quantity of network operating parameters generated can have a periodic pattern, in order to implement formula [5] it is possible to consider the average value E[] as a substitute for the probability in the time interval $T_k$.

Considering the above, the method provides for calculating the number of mobile stations MS considering the average value $\dot{E}[p_{M-OC,i}(k)]$ of the probability that a user originates at least $i$ calls in the time interval $T_k$, the average value $\dot{E}[p_{M-TC,i}(k)]$ of the probability that a user receives at least $i$ calls in the time interval $T_k$, the average value $\dot{E}[p_{SMS-MO,i(k)}]$ of the probability that a user originates at least $i$ SMSs in the time interval $T_k$, the average value $\dot{E}[p_{SMS-MT,i(k)}]$ of the probability that a user receives at least $i$ SMSs in the time interval $T_k$ and the average value $\dot{E}[p_0(k)]$ of the probability that a user is in Idle Mode IM in the time interval $T_k$. Therefore formula [6] can be rewritten as follows:

$$MS_{k,C} \approx \dot{E}[p_{M-OC,1}(k)] \cdot \left[\sum_{i=1}^{n} \dot{E}[p_{M-OC,i}(k)]\right]^{-1} \cdot N_{M-OC_{k,C}} + \dot{E}[p_{M-TC,1}(k)] \cdot \left[\sum_{i=1}^{m} \dot{E}[p_{M-TC,i}(k)]\right]^{-1} \cdot N_{M-TC_{k,C}} +$$

$$+ \dot{E}[p_{MO-SMS,1}(k)] \cdot \left[\sum_{i=1}^{h} \dot{E}[p_{MO-SSMS,i}(k)]\right]^{-1} \cdot N_{MO-SMS_{k,C}} + \dot{E}[p_{MT-SMS,1}(k)] \cdot \left[\sum_{i=1}^{h} \dot{E}[p_{MT-SMS,i}(k)]\right]^{-1} \cdot N_{MT-SMS_{k,C}}$$

$$+ \dot{E}[p_0(k)] \cdot \frac{N_{I_{k,C}}}{\dot{E}[p_0(k)]}$$

[6]

It is worth noting that the average value $\dot{E}[p_{M\text{-}OC,i}(k)]$ of the probability that a user originates at least $i$ calls in the time interval $T_k$, within a geographic area A, is calculated by means of the following relationship:

$$[6.1] \qquad \dot{E}[p_{MOC,i}(k)] \cong \frac{T_{MOC}}{T_{MS}},$$

where $T_{MOC}$ represents the number of distinct users who have made $i$ calls and $T_{MS}$ represents the total quantity of mobile stations MS.

Similarly, to calculate the remaining average values associated with relationship [6], the following relationships apply:

$$[6.2] \qquad \dot{E}[p_{MTC,i}(k)] \cong \frac{T_{MTC}}{T_{MS}},$$

$$[6.3] \qquad \dot{E}[p_{MOSMS,i}(k)] \cong \frac{T_{MOSMS}}{T_{MS}},$$

$$[6.4] \qquad \dot{E}[p_{MTSMS,i}(k)] \cong \frac{T_{MTSMS}}{T_{MS}}.$$

In a test carried out on the first day of the twentieth week of the year 2010 in the geographic area of Milan on cell number C-10 served by Base Transceiver Station BTS-10 present in the geographic area of Milan in the time interval $T_k$ between the hours 12:00 and 13:00, the Operations and Maintenance Centre OMC stored the following network operating parameters:

- total number of originated calls $N_{M-OC} = 68$,
- number of terminated calls $N_{M-TC} = 47$,
- total number of originated SMSs $N_{SMS-MO} = 18$,
- total number of terminated SMSs $N_{SMS-MT} = 22$,
- number of Location Updates $N_{LU} = 161$,
- number of Incoming Handovers $N_{IHO} = 139$,
- number of Outgoing Handovers $N_{OHO} = 121$,
- number of Cancel Locations $N_{CL} = 0$,
- number of users in Idle Mode $N_{IM}$ in the time interval $T_{k-1}$ between the hours 11:00 and 12:00 = 30,

while the Network Troubleshooting Tool recorded the following values:

- total number of mobile stations $T_{HO-MOC}$, within the geographic area of Milan, moving during a call from cell number C-10 to adjacent cell number C-11 = 680,
- total number of mobile stations $T_{MOC}$ within the geographic area of Milan = 1704.

By applying formula [1], the number of user terminals in Idle Mode $N_{IM}$ present in cell number C-10 served by Base Transceiver Station BTS-10 in the geographic area of Milan turned out to be equal to:

$$N_{IM} \cong 161 + 139 - 121 - 0 = 179.$$

Considering the average value E[] of the ratio between $T_{HO-MOC}$ and $T_{MOC}$, by applying relationship [1.1], the probability parameter $\sigma$ turned out to be equal to:

$$\sigma = \frac{680}{1700} = 0,4.$$

Therefore, by applying relationship [2], the number of user terminals MS in Idle Mode $N_{IM}$ turned out overall to be equal to:

$$N_{IM} \cong 30*0.4 + 161 + 139 - 121 - 0 = 191.$$

By substituting the network operating parameters determined from the test into [6], the following result is obtained:

$$N_{MS} \cong \alpha^i(N_{M-OC}) + \alpha^{ii}(N_{M-TC}) + \beta^i(N_{SMS-MO}) + \beta^{ii}(N_{SMS-MT}) + \gamma(N_{IM}) =$$

$$= 0.558 \cdot 68 + 0.702 \cdot 47 + 0.5 \cdot 18 + 0.5 \cdot 22 + 191 =$$

$$= 38 + 33 + 9 + 11 + 191 = 282$$

The number of mobile stations MS present in cell number C-10 and served by Base Transceiver Station BTS-10 installed in the geographic area of Milan in one hour turned out to be 282.

It is worth noting that the coefficients associated with the probability functions $\alpha^i$, $\alpha^{ii}$, $\beta^i$, $\beta^{ii}$ and $\gamma^i$ are determined on the basis of network usage statistics collected over a determined period of time.

For example, in the test described above, by applying relationship [6.1], the average value $\dot{E}[p_{M-OC,i}(k)]$ of the probability that a user has originated 68 calls in the time interval $T_k$ between the hours 12:00 and 13:00 turned out to be equal to:

$$\dot{E}[p_{MOC,i}(k)] \cong \frac{T_{MOC}}{T_{MS}} = \frac{4185}{7500} = 0.558.$$

where $T_{MOC}$ represents the number of distinct users who have made $i$ calls in the geographic area of Milan at 12:00 hours of the first day of the twentieth week of 2010 and $T_{MS}$ represents the total quantity of mobile stations MS.

Similarly, by applying relationships [6.2], [6.3] and [6.4], the following probabilities resulted:

$$\dot{E}[p_{MTC,i}(k)] \cong \frac{T_{MTC}}{T_{MS}} = \frac{5265}{7500} = 0.702,$$

$$\dot{E}[p_{SMS-MO/MT,i}(k)] \cong \frac{T_{SMS-MO/MT}}{T_{MS}} = \frac{3750}{7500} = 0.5.$$

In one version, the method according to the invention provides for graphically representing the distribution of the mobile stations MS on a geographic map.

To this end, the method uses a mapping service WP containing the geographic coordinates indicating the area of coverage of each Base Transceiver Station $BTS_{2G}$ installed in the region. By processing, by means, for example, of second processing means 11, the values of the geographic coordinates with the values obtained by means of formula [6], the method according to the invention provides for graphically representing the distribution of mobile stations MS in a geographic map by means of a Geographic Information System (GIS). Thus, it is possible to use the results of the distribution of mobile stations MS for security, emergency, geomarketing, planning, etc services.

It is worth noting that the estimate of the number of mobile stations MS is based on the probability that determined activities in a telecommunications network occur, for example, on the probability that a call is made/received, that an SMS is sent, etc within a geographic area A of interest taken as reference.

According to a second embodiment, the method according to the invention provides for estimating the number of mobile stations MS within a geographic area A, which are served by at least one Base Transceiver Station $BTS_{3G}$ able to transmit 3G technology radio signals.

Due to the different network architecture, it is to be noted that the Operations and Maintenance Centre OMC is not capable of measuring the same network operating parameters for the 2G service and the 3G service. In particular, for the 3G service, the Operations and Maintenance Centre OMC is capable of storing the traffic intensity $V_{k,C}$ (in Erlangs) generated for each cell $C_{3G}$ in a time interval $T_k$.

By using the available traffic intensity value $V_{k,C}$ and the average traffic intensity value $\dot{E}[V_k]$, it is possible to estimate the number of mobile stations MS as follows:

$$[7] \qquad MS_{k,C}^{x} \propto \frac{V_{k,C}}{E[V_k]}$$

where $V_{k,C}$ corresponds to the traffic intensity measured for the cell $C_{3G}$ in a time interval $T_k$ and $\dot{E}[V_k]$ corresponds to the average statistical value of the traffic intensity.

According to the present invention, it is assumed that a mobile station MS served by a Base Transceiver Station $BTS_{3G}$ able to transmit 3G technology radio signals substantially carries out the same activities as a mobile station MS served by a Base Transceiver Station $BTS_{2G}$ able to transmit 2G technology radio signals, and so it is possible to link the network operating parameters related to the cells $C_{2G}$ with the network operating parameters related to the cells $C_{3G}$ which overlap one another in a given geographic area. Considering this, provision is made for considering a cell $C_{3G}$, the area of which intersects that of a cell $C_{2G}$.

In the area of intersection between a cell $C_{3G}$ and a cell $C_{2G}$, the method according to the invention therefore provides for considering that a mobile station MS served by a Base Transceiver Station $BTS_{3G}$ makes substantially the same number of originated calls $N_{M-OC}$, terminated calls $N_{M-TC}$, originated SMSs $N_{SMS-MO}$, terminated SMSs $N_{SMS-MT}$, Location Updates $N_{LU}$, Incoming Handovers $N_{IHO}$, and Outgoing Handovers $N_{OHO}$ as a mobile station MS served by a Base Transceiver Station $BTS_{2G}$.

Considering the above-described assumptions, the set of all the cells $C_{3G}$ which intersect the cells $C_{2G}$ is defined by the following relationship:

$$[8] \quad \hat{C}_{3G} = \left\{ u \in C_{3G} : \; \|u\| \cap \|c\| \neq 0 \;, c \in C_{2G} \right\}$$

where $C_{xG}$ is the set of the cells $C_{2G}$ and $C_{3G}$, and $\|\cdot\|$ is the geographic area covered by a cell.

In particular, considering the set of all the cells $C_{3G}$ which intersect the cells $C_{2G}$, it is possible to calculate the number of mobile stations MS thus:

$$[9] \qquad \dot{MS}_{k,c_i} = MS_{k,c_i}^{2G} + \sum_{j=1}^{z} \delta_{u_j c_i} MS_{k,u_j}^{3G} \cong MS_{k,c_i}^{2G} + \sum_{j=1}^{z} \delta_{u_j c_i} \lambda_{ij,k} \cdot \frac{V_{k,u_j}}{E[V_k]}$$

where $z$ represents the number of cells $C_{3G}$ which intersect the i-th cell $C_{2G}$ and $\delta_{ui,ci}$ is the percentage of overlap between the j-th cell $C_{3G}$ and the i-th cell $C_{2G}$.

$\lambda i_{j,k}$ is defined as the weight which depends on the i-th cell $C_{2G}$ and can be calculated as follows:

$$[10] \qquad \lambda_{ij,k} = \frac{MS_{k,c_i}^{2G}}{V_{k,c_i}} \cdot E[V_k]$$

By substituting [10] into [9], the number of mobile stations MS in a geographic area A which are served by a cell $C_{3G}$ can therefore be determined in the following way:

$$[11] \qquad \dot{MS}_{k,c_i} \cong MS_{k,c_i}^{2G} \cdot \left( 1 + \sum_{j=1}^{z} \delta_{u_j c_i} \frac{V_{k,u_j}}{V_{k,c_i}} \right)$$

In one version, the method according to the invention provides for estimating the number of individuals within a geographic area A. Indeed, considering, for example, that in Italy the number of mobile stations MS is in the ratio 1 to 1 with the number of individuals of the population, the method of the present invention provides for determining the number of individuals P in a geographic area A in the time interval $T_k$.

It is therefore possible to estimate the number of individuals who are located within the cell $C_i$ in the time interval $T_k$ by means of following relationship:

$$[12] \qquad MS_{k,C} \cong P_{k,C}.$$

As can be appreciated from that described, the method according to present invention provides for meeting the requirements and overcoming the drawbacks referred to in the introductory part of the present description with reference to the prior art.

Clearly, a technician skilled in the art, with the aim of meeting the contingent and specific requirements, may bring about numerous modifications and variations to the method according to the present invention described above, all of which however falling within the scope of protection of the invention, which scope is defined by the following claims.

**Claims**

1. A method for estimating the number of mobile stations (MS) in a geographic area A in the time interval $T_k$, comprising the steps of:

- receiving at least one network operating parameter $N_{M-OC}$, $N_{M-TC,\ NSMS-MO}$, $N_{SMS-MT}$, $N_{LU}$, $N_{IHO}$, $N_{OHO}$ generated by each mobile station (MS) served in a time interval $T_k$ by at least one 2G Base Transceiver Station (BTS$_{2G}$), said at least one 2G Base Transceiver Station (BTS$_{2G}$) being adapted to transmit/receive 2G technology radio signals in a 2G cell (C$_{2G}$) of the geographic area A,
- processing the network operating parameters generated by each mobile station in order to estimate the number of mobile stations (MS) served in the time interval T$_k$ by the at least one 2G Base Transceiver Station (BTS$_{2G}$),

said method being **characterized in that**:

- said step of receiving at least one network operating parameter comprises the step of storing for each 2G Base Transceiver Station (BTS$_{2G}$) the following network operating parameters: the total number of originated calls N$_{M-OC}$, the total number of terminated calls N$_{M-TC}$, the total number of originated SMSs N$_{SMS-MO}$, the total number of terminated SMSs N$_{SMS-MT}$, the total number of Location Updates N$_{LU}$, the total number of Incoming Handovers N$_{IHO}$, and the total number of Outgoing Handovers N$_{OHO}$;
- said step of processing the network operating parameters N$_{M-OC}$, N$_{M-TC}$, N$_{SMS-MO}$, N$_{SMS-MT}$, N$_{LU}$, N$_{IHO}$, N$_{OHO}$ comprises the steps of:

  - setting a value of probability that each mobile station (MS) generates said network operating parameters N$_{M-OC}$, N$_{M-TC}$, N$_{SMS-MO}$, N$_{SMS-MT}$, N$_{LU}$, N$_{IHO}$, N$_{OHO}$, and
  - multiplying each generated network operating parameter N$_{M-OC}$, N$_{M-TC}$, N$_{SMS-MO}$, N$_{SMS-MT}$, N$_{LU}$, N$_{IHO}$, N$_{OHO}$ by the corresponding probability value and;
  - calculating the number of mobile stations (MS) in Idle Mode IM in said geographic area by means of the following relationship:

$$N_{IM_{k,C}} \cong \sigma_{k-1} \cdot N_{IM,k-1} + N_{LU,k} + N_{IHO,k} - N_{OHO,k} - N_{CL,k}$$

where N$_{IMk,C}$ represents the number of mobile stations in Idle Mode in the 2G cell (C$_{2G}$) of the geographic area A, $\sigma$ represents the probability parameter proportional to the amount of users in Idle Mode IM, N$_{LU,k}$ represents the number of Location Updates generated, N$_{IHO,k}$ represents the number of Incoming Handovers, N$_{OHO,k}$ represents the number of Outgoing Handovers and N$_{CL,k}$ represents the number of Cancel Locations.

2. A method according to any one of Claims 1, **characterized in that** the step of processing the network operating parameters N$_{M-OC}$, N$_{M-TC}$, N$_{SMS-MO}$, N$_{SMS-MT}$, N$_{LU}$, N$_{IHO}$, N$_{OHO}$ is carried out by means of the following relationship:

$$MS_{k,C} \approx p_{M-OC,i}(k) \cdot \left[\sum_{i=1}^{n} p_{M-OC,i}(k)\right]^{-1} \cdot N_{M-OC_{k,C}} + p_{M-TC,i}(k) \cdot \left[\sum_{i=1}^{m} p_{M-TC,i}(k)\right]^{-1} \cdot N_{M-TC_{k,C}} +$$

$$+ p_{SMS-MO,i}(k) \cdot \left[\sum_{i=1}^{s} p_{SMS-MO,i}(k)\right]^{-1} \cdot N_{SMS-MO_{k,C}} + p_{SMS-MT,i}(k) \cdot \left[\sum_{i=2}^{w} p_{SMS-MT,i}(k)\right]^{-1} \cdot N_{SMS-MT_{k,C}}$$

$$+ p_0(k) \cdot \frac{N_{IM_{k,C}}}{p_0(k)},$$

where p$_{M-OC,i}$($k$) is the probability that a user originates at least $i$ calls in the time interval T$_k$, p$_{M-TC,i}$($k$) is the probability that a user receives at least $i$ calls in the time interval T$_k$, p$_{SMS-MO,i(k)}$ is the probability that a user originates at least $i$ SMSs in the time interval T$_k$, p$_{SMS-MT,i(k)}$ is the probability that a user receives at least $i$ SMSs in the time interval T$_k$ and p$_0$($k$) is the probability that a user is in Idle Mode IM in the time interval T$_k$.

3. A method according to Claim 2, **characterized by** comprising the step of processing the network operating parameters N$_{M-OC}$, N$_{M-TC}$, N$_{SMS-MO}$, N$_{SMS-MT}$, N$_{LU}$, N$_{IHO}$, N$_{OHO}$ by means of the following relationship:

$$MS_{k,C} \approx \dot{E}[p_{M-OC,1}(k)] \cdot \left[\sum_{i=1}^{n} \dot{E}[p_{M-OC,i}(k)]\right]^{-1} \cdot N_{M-OC_{k,c}} + \dot{E}[p_{M-TC,1}(k)] \cdot \left[\sum_{i=1}^{m} \dot{E}[p_{M-TC,i}(k)]\right]^{-1} \cdot N_{MTC_{k,c}} +$$

$$+ \dot{E}[p_{MO-SMS,1}(k)] \cdot \left[\sum_{i=1}^{h} \dot{E}[p_{MO-SMS,i}(k)]\right]^{-1} \cdot N_{MO-SMS_{k,c}} + \dot{E}[p_{MT-SMS,1}(k)] \cdot \left[\sum_{i=1}^{h} \dot{E}[p_{MT-SMS,i}(k)]\right]^{-1} \cdot N_{MT-SMS_{k,c}}$$

$$+ \dot{E}[p_0(k)] \cdot \frac{N_{k,c}}{\dot{E}[p_0(k)]}$$

where $E \cdot [p_{M-OC,i}(k)]$ corresponds to the average value of the probability that a user originates at least *i* calls in the time interval $T_k$, $\dot{E} \cdot [p_{M-TC,i}(k)]$ corresponds to the average value of the probability that a user receives at least *i* calls in the time interval $T_k$, $\dot{E} \cdot [p_{SMS-MO,i(k)}]$ corresponds to the average value of the probability that a user originates at least i SMSs in the time interval $T_k$, $\dot{E}[p_{SMS-MT,i(k)}]$ corresponds to the average value of the probability that a user receives at least *i* SMSs in the time interval $T_k$ and $\dot{E}[p_0(k)]$ corresponds to the average value of the probability that a user is in Idle Mode IM in the time interval $T_k$.

4.  A method according to Claim 3, **characterized by** comprising the steps of:

    - using a mapping service (WP) containing the geographic coordinates of the 2G cell ($C_{2G}$) served by each 2G Base Transceiver Station ($BTS_{2G}$),
    - processing the values of the geographic coordinates of the 2G cell ($C_{2G}$) served by each 2G Base Transceiver Station ($BTS_{2G}$) with the Location Update LU values associated with the mobile stations (MS) for the purposes of graphically representing the distribution of the mobile stations (MS) in a geographic map.

5.  A method according to any one of Claims 1 to 3, **characterized by** comprising the steps of:

    - receiving a value of the traffic intensity $V_{k,C}$ [Erlang] that is measured for a 3G cell ($C_{3G}$) of the geographic area A in the time interval $T_k$ and that is generated by each mobile station (MS) served by at least one 3G Base Transceiver Station ($BTS_{3G}$), said 3G Base Transceiver Station ($BTS_{3G}$)being adapted to transmit/receive 3G radio signals in said 3G cell ($C_{3G}$) of the geographic area A,
    - calculating the average statistical value $\dot{E}(V_k)$ of the traffic intensity $V_{k,C}$,
    - dividing the value of the traffic intensity $V_{k,C}$ by the average statistical value $\dot{E}(V_k)$ of the traffic intensity $V_{k,C}$ for the purpose of calculating the number of mobile stations (MS) served by said 3G Base Transceiver Station ($BTS_{3G}$) in said time interval $T_k$.

6.  A method according to Claim 5 **characterized by** comprising the step of:-calculating the set of all the 3G cells ($C_{3G}$) which intersect the 2G cells ($C_{2G}$) in said geographic area A by means of the following relationship:

$$\dot{MS}_{k,c_i} = MS_{k,c_i}^{2G} + \sum_{j=1}^{z} \delta_{u_j c_i} MS_{k,u_j}^{3G} \cong MS_{k,c_i}^{2G} + \sum_{j=1}^{z} \delta_{u_j c_i} \lambda_{ij,k} \cdot \frac{V_{k,u_j}}{E[V_k]}$$

where: z is the number of 3G cell ($C_{3G}$) which intersect the i-th 2G cell ($C_{2G}$) and $\delta_{u,j,ci}$ is the percentage of overlap between the j-th 3G cell ($C_{3G}$) and the i-th 2G cell ($C_{2G}$). $\lambda_{ij,k}$ is the weight which depends on the i-th 2G cell ($C_{2G}$) and is calculated a

$$\lambda_{ij,k} = \frac{MS_{k,c_i}^{2G}}{V_{k,c_i}} \cdot E[V_k]$$

    - calculating the number of mobile stations MS in said geographic area A which are served by all said 3G cell ($C_{3G}$) by means of:

$$\dot{MS}_{k,c_i} \cong MS^{2G}_{k,c_i} \cdot \left(1 + \sum_{j=1}^{z} \delta_{u_j c_i} \frac{V_{k,u_j}}{V_{k,c_i}}\right)$$

7. A system for estimating the number of mobile stations (MS) in a geographic area A in the time interval $T_k$, comprising:

- at least one 2G Base Transceiver Station ($BTS_{2G}$) being adapted to transmit/receive 2G technology radio signals in a 2G cell ($C_{2G}$) of the geographic area A to a plurality of mobile stations (MS),
- a Base Station Controller (BSC) being arranged to control the at least one 2G Base Transceiver Station ($BTS_{2G}$),
- an Operations and Maintenance Centre (OMC) connected to the Base Station Controller (BSC) and being adapted to store, at every time interval $T_k$, for each 2G cell ($C_{2G}$), at least one network operating parameter $N_{M-OC}$, $N_{M-TC}$, $N_{SMS-MO}$, $N_{SMS-MT}$, $N_{LU}$, $N_{IHO}$, $N_{OHO}$ generated by each mobile station (MS) served in the time interval $T_k$ by at least the 2G Base Transceiver Station ($BTS_{2G}$),
- processing means (10) connected to the Operations and Maintenance Centre (OMC) in order to process the at least one network operating parameter $N_{M-OC}$, $N_{M-TC}$, $N_{SMS-MO}$, $N_{SMS-MT}$, $N_{LU}$, $N_{IHO}$, $N_{OHO}$ and adapted to estimate the number of mobile stations (MS) served in the time interval $T_k$ by the at least one 2G Base Transceiver Station ($BTS_{2G}$),

**characterised in that** the processing means (10) are adapted to set the value of probability that each mobile station (MS) generates the following network operating parameters and to store for each 2G base transceiver station ($BTS_{2G}$) said parameters: the total number of originated calls $N_{M-OC}$, the total number of terminated calls $N_{M-TC}$, the total number of originated SMSs $N_{SMS-MO}$, the total number of terminated SMSs $N_{SMS-MT}$, the total number of Location Updates $N_{LU}$, the total number of Incoming Handovers $N_{IHO}$ and the total number of Outgoing Handovers $N_{OHO}$; said processor means are adapted to multiply the generated network operating parameters $N_{M-OC}$, $N_{M-TC}$, $N_{SMS-MO}$, $N_{SMS-MT}$, $N_{LU}$, $N_{IHO}$, $N_{OHO}$ by the corresponding value of probability that each mobile station (MS) generates said network operating parameters $N_{M-OC}$, $N_{M-TC}$, $N_{SMS-MO}$, $N_{SMS-MT}$, $N_{LU}$, $N_{IHO}$, $N_{OHO}$ and are adapted to determine the number of mobile stations (MS) present in the geographic area A in the time interval $T_k$ by means of the following relationship:

$$MS_{k,C} = f(N_{M-OC_{k,C}}, N_{M-TC_{k,C}}, N_{SMS-MO_{k,C}}, N_{SMS-MT_{k,C}}, N_{IM_{k,C}}).$$

wherein

$$N_{IM_{k,C}} \cong \sigma_{k-1} \cdot N_{IM,k-1} + N_{LU,k} + N_{IHO,k} - N_{OHO,k} - N_{CL,k}$$

where $N_{IMk,C}$ represents the number of mobile stations in Idle Mode in said 2G cell of geographic area A, $\sigma$ represents the probability parameter proportional to the amount of users in Idle Mode IM, $N_{LU,k}$ represents the number of Location Updates generated, $N_{IHO,k}$ represents the number of Incoming Handovers, $N_{OHO,k}$ represents the number of Outgoing Handovers and $N_{CL,k}$ represents the number of Cancel Locations.

8. A system according to Claim 7, **characterized in that** the processing means are adapted to determine the number of mobile stations (MS) by processing the following relationship:

$$MS_{k,C} \approx p_{M-OC,i}(k) \cdot \left[ \sum_{i=1}^{n} p_{M-OC,i}(k) \right]^{-1} \cdot N_{M-OC_{k,C}} + p_{M-TC,i}(k) \cdot \left[ \sum_{i=1}^{m} p_{M-TC,i}(k) \right]^{-1} \cdot N_{M-TC_{k,C}} +$$

$$+ p_{SMS-MO,i}(k) \cdot \left[ \sum_{i=1}^{s} p_{SMS-MO,i}(k) \right]^{-1} \cdot N_{SMS-MO_{k,C}} + p_{SMS-MT,i}(k) \cdot \left[ \sum_{i=2}^{w} p_{SMS-MT,i}(k) \right]^{-1} \cdot N_{SMS-MT_{k,C}}$$

$$+ p_0(k) \cdot \frac{N_{IM_{k,C}}}{p_0(k)},$$

where $p_{M-OC,i}(k)$ is the probability that a user originates at least $i$ calls in the time interval $T_k$, $p_{M-TC,i}(k)$ is the probability that a user receives at least $i$ calls in the time interval $T_k$, $p_{SMS-MO,i(k)}$ is the probability that a user originates at least $i$ SMSs in the time interval $T_k$, $p_{SMS-MT,i(k)}$ is the probability that a user receives at least $i$ SMSs in the time interval $T_k$ and $p_0(k)$ is the probability that a user is in Idle Mode IM in the time interval $T_k$.

9. A system according to either Claim 7 or Claim 8, **characterized by** comprising:

- a mapping service (WP) containing the geographic coordinates indicating the area of coverage of each 2G Base Transceiver Station ($BTS_{2G}$) installed in the region,
- second processing means (11) being adapted to process the values of the geographic coordinates of the 2G cell ($C_{2G}$) served by each 2G Base Transceiver Station ($BTS_{2G}$) with at least one Location Update LU value associated with the mobile station (MS) for the purposes of graphically representing the distribution of the mobile stations (MS) in a geographic map.

**Patentansprüche**

1. Verfahren zum Schätzen der Anzahl von Mobilstationen (MS) in einem geographischen Gebiet A im Zeitintervall $T_k$, das die folgenden Schritte umfasst:

- Empfangen von mindestens einem Netzwerkbetriebsparameter $N_{M-OC}$, $N_{M-TC}$, $N_{SMS-MO}$, $N_{SMS-MT}$, $N_{LU}$, $N_{IHO}$ und $N_{OHO}$, der von jeder Mobilstation (MS) generiert wird, die in einem Zeitintervall $T_k$ von mindestens einer 2G-Basisstation ($BTS_{2G}$) bedient wird, wobei diese mindestens eine 2G-Basisstation ($BTS_{2G}$) geeignet ist, auf der 2G-Technologie basierende Funksignale in einer 2G-Zelle ($C_{2G}$) des geographischen Gebiets A zu senden/empfangen,
- Verarbeiten der von jeder Mobilstation generierten Netzwerkbetriebsparameter, um die Anzahl von Mobilstationen (MS) zu schätzen, die in dem Zeitintervall $T_k$ von der mindestens einen 2G-Basisstation ($BTS_{2G}$) bedient werden,

wobei dieses Verfahren **dadurch gekennzeichnet ist, dass**:

- der Schritt des Empfangens von mindestens einem Netzwerkbetriebsparameter den Schritt des Speicherns der folgenden Netzwerkbetriebsparameter für jede 2G-Basisstation ($BTS_{2G}$) umfasst: die Gesamtzahl der abgehenden Anrufe $N_{M-OC}$, die Gesamtzahl der ankommenden Anrufe $N_{M-TC}$, die Gesamtzahl der abgehenden SMS-Nachrichten $N_{SMS-MO}$, die Gesamtzahl der ankommenden SMS-Nachrichten $N_{SMS-MT}$, die Gesamtzahl der Location Updates $N_{LU}$, die Gesamtzahl der hereinkommenden Verbindungsübergaben $N_{IHO}$ und die Gesamtzahl der herausgehenden Verbindungsübergaben $N_{OHO}$;
- wobei der Schritt des Verarbeitens der Netzwerkbetriebsparameter $N_{MOC}$, $N_{M-TC}$, $N_{SMS-MO}$, $N_{SMS-MT}$, $N_{LU}$, $N_{IHO}$ und $N_{OHO}$ die folgenden Schritte umfasst:
- Festlegen eines Werts der Wahrscheinlichkeit, dass jede Mobilstation (MS) die Netzwerkbetriebsparameter $N_{M-OC}$, $N_{M-TC}$, $N_{SMS-MO}$, $N_{SMS-MT}$, $N_{LU}$, $N_{IHO}$ und $N_{OHO}$ generiert, und
- Multiplizieren von jedem generierten Netzwerkbetriebsparameter $N_{MOC}$, $N_{M-TC}$, $N_{SMS-MO}$, $N_{SMS-MT}$, $N_{LU}$, $N_{IHO}$ und $N_{OHO}$ mit dem entsprechenden Wahrscheinlichkeitswert, und
- Berechnen der Anzahl von Mobilstationen (MS) im Leerlaufmodus IM in dem geographischen Gebiet mittels folgender Beziehung:

$$N_{IM_{k,C}} \cong \sigma_{k-1} \cdot N_{IM,k-1} + N_{LU,k} + N_{IHO,k} - N_{OHO,k} - N_{CL,k}$$

wobei $N_{IMk,C}$ für die Anzahl von Mobilstationen im Leerlaufmodus in der 2G-Zelle ($C_{2G}$) des geographischen Gebiets A steht, $\sigma$ für den Wahrscheinlichkeitsparameter steht, der proportional zur Menge von Teilnehmern im Leerlaufmodus IM ist, $N_{LU,k}$ für die Anzahl von generierten Location Updates steht, $N_{IHO,k}$ für die Anzahl von hereinkommenden Verbindungsübergaben steht, $N_{OHO,k}$ für die Anzahl von herausgehenden Verbindungsübergaben steht und $N_{CL,k}$ für die Anzahl der Aufforderungen zum Löschen der Teilnehmerdaten steht.

2. Verfahren nach Anspruch 1, **dadurch gekennzeichnet, dass** der Schritt des Verarbeitens der Netzwerkbetriebsparameter $N_{M-OC}$, $N_{M-TC}$, $N_{SMS-MO}$, $N_{SMS-MT}$, $N_{LU}$, $N_{IHO}$ und $N_{OHO}$ mittels folgender Beziehung ausgeführt wird:

$$MS_{k,C} \approx p_{M-OC,i}(k) \cdot \left[ \sum_{i=1}^{n} p_{M-OC,i}(k) \right]^{-1} \cdot N_{M-OC_{k,C}} + p_{M-TC,i}(k) \cdot \left[ \sum_{i=1}^{m} p_{M-TC,i}(k) \right]^{-1} \cdot N_{M-TC_{k,C}}$$

$$+ p_{SMS-MO,i}(k) \cdot \left[ \sum_{i=1}^{s} p_{SMS-MO,i}(k) \right]^{-1} \cdot N_{SMS-MO_{k,C}} + p_{SMS-MT,i}(k) \cdot \left[ \sum_{i=2}^{w} p_{SMS-MT,i}(k) \right]^{-1} \cdot N_{SMS-MT_{k,C}}$$

$$+ p_0(k) \cdot \frac{N_{IM_{k,C}}}{p_0(k)},$$

wobei $P_{M-OC,i}(k)$ für die Wahrscheinlichkeit steht, dass ein Teilnehmer mindestens $i$ Anrufe im Zeitintervall $T_k$ absetzt, $P_{M-TC,i}(k)$ für die Wahrscheinlichkeit steht, dass ein Teilnehmer mindestens $i$ Anrufe im Zeitintervall $T_k$ empfängt, $P_{SMS-MO,i}(k)$ für die Wahrscheinlichkeit steht, dass ein Teilnehmer mindestens $i$ SMS-Nachrichten im Zeitintervall $T_k$ absetzt, $P_{SMS-MT,i}(k)$ für die Wahrscheinlichkeit steht, dass ein Teilnehmer mindestens $i$ SMS-Nachrichten im Zeitintervall $T_k$ empfängt, und $P_0(k)$ für die Wahrscheinlichkeit steht, dass ein Teilnehmer im Zeitintervall $T_k$ im Leerlaufmodus IM ist.

3. Verfahren nach Anspruch 2, **dadurch gekennzeichnet, dass** es den Schritt des Verarbeitens der Netzwerkbetriebsparameter $N_{M-OC}$, $N_{M-TC}$, $N_{SMS-MO}$, $N_{SMS-MT}$, $N_{LU}$, $N_{IHO}$ und $N_{OHO}$ mittels folgender Beziehung umfasst:

$$MS_{k,C} \approx \dot{E}\left[p_{M-OC,i}(k)\right] \cdot \left[ \sum_{i=1}^{n} \dot{E}\left[p_{M-OC,i}(k)\right] \right]^{-1} \cdot N_{M-OC_{k,C}} + \dot{E}\left[p_{M-TC,i}(k)\right] \cdot \left[ \sum_{i=1}^{m} \dot{E}\left[p_{M-TC,i}(k)\right] \right]^{-1} \cdot N_{MTC_{k,C}}$$

$$+ \dot{E}\left[p_{MO-SMS,i}(k)\right] \cdot \left[ \sum_{i=1}^{h} \dot{E}\left[p_{MO-SMS,i}(k)\right] \right]^{-1} \cdot N_{MO-SMS_{k,C}} + \dot{E}\left[p_{MT-SMS,i}(k)\right] \cdot \left[ \sum_{i=1}^{h} \dot{E}\left[p_{MT-SMS,i}(k)\right] \right]^{-1} \cdot N_{MT-SMS_{k,C}}$$

$$+ \dot{E}\left[p_0(k)\right] \cdot \frac{N_{I_{k,C}}}{\dot{E}\left[p_0(k)\right]},$$

wobei $E[P_{M-OC,i}(k)]$ dem Mittelwert der Wahrscheinlichkeit entspricht, dass ein Teilnehmer mindestens $i$ Anrufe im Zeitintervall $T_k$ absetzt, $E[P_{M-TC,i}(k)]$ dem Mittelwert der Wahrscheinlichkeit entspricht, dass ein Teilnehmer mindestens $i$ Anrufe im Zeitintervall $T_k$ empfängt, $E[P_{SMS-Mo,i}(k)]$ dem Mittelwert der Wahrscheinlichkeit entspricht, dass ein Teilnehmer mindestens $i$ SMS-Nachrichten im Zeitintervall $T_k$ absetzt, $E[P_{SMS-MT,i}(k)]$ dem Mittelwert der Wahrscheinlichkeit entspricht, dass ein Teilnehmer mindestens $i$ SMS-Nachrichten im Zeitintervall $T_k$ empfängt, und $E[P_0(k)]$ dem Mittelwert der Wahrscheinlichkeit entspricht, dass ein Teilnehmer im Zeitintervall $T_k$ im Leerlaufmodus IM ist.

4. Verfahren nach Anspruch 3, **dadurch gekennzeichnet, dass** es die folgenden Schritte umfasst:

- Verwenden eines Kartierungsdienstes (WP), der die geographischen Koordinaten der 2G-Zelle ($C_{2G}$) enthält, die von jeder 2G-Basisstation ($BTS_{2G}$) bedient wird,

- Verarbeiten der Werte der geographischen Koordinaten der 2G-Zelle ($C_{2G}$), die von jeder 2G- Basisstation ($BTS_{2G}$) bedient wird, mit den Werten des Location Update LU, die mit den Mobilstationen (MS) verknüpft sind, zum Zweck der graphischen Darstellung der Verteilung der Mobilstationen (MS) in einer geographischen Karte.

5. Verfahren nach einem der Ansprüche 1 bis 3, **dadurch gekennzeichnet, dass** es die folgenden Schritte umfasst:

- Empfangen eines Verkehrswerts $V_{k,C}$ [Erlang], der bei einer 3G-Zelle ($C_{3G}$) des geographischen Gebiets A im Zeitintervall $T_k$ gemessen wird und von jeder Mobilstation (MS) generiert wird, die von mindestens einer 3G-Basisstation ($BTS_{3G}$) bedient wird, wobei diese 3G-Basisstation ($BTS_{3G}$) geeignet ist, 3G-Funksignale in dieser 3G-Zelle ($C_{3G}$) des geographischen Gebiets A zu senden/empfangen,
- Berechnen des statistischen Mittelwerts $E(V_k)$ des Verkehrswerts $V_{k,C}$,
- Teilen des Verkehrswerts $V_{k,C}$ durch den statistischen Mittelwert $E(V_k)$ des Verkehrswerts $V_{k,C}$ zum Zweck der Berechnung der Anzahl von Mobilstationen (MS), die von der 3G-Basisstation ($BTS_{3G}$) im Zeitintervall $T_k$ bedient werden.

6. Verfahren nach Anspruch 5, **dadurch gekennzeichnet, dass** es den folgenden Schritt umfasst:

- Berechnen der Menge aller 3G-Zellen ($C_{3G}$), die sich in dem geographischen Gebiet A mit den 2G-Zellen ($C_{2G}$) überschneiden, mittels folgender Beziehung:

$$MS_{k,C_i} \approx MS_{k,c_i}^{2G} + \sum_{j=1}^{z} \delta_{u_j c_i} MS_{k,u_j}^{3G} \cong MS_{k,c_i}^{2G} + \sum_{j=1}^{z} \delta_{u_j c_i} \lambda_{ij,k} \cdot \frac{V_{k,u_j}}{E[V_k]}$$

wobei gilt: z ist die Anzahl von 3G-Zellen ($C_{3G}$), die sich mit der i-ten 2G-Zelle ($C_{2G}$) überschneiden, und $\delta_{uj,ci}$ ist der Prozentsatz der Überlappung zwischen der j-ten 3G-Zelle ($C_{3G}$) und der i-ten 2G-Zelle ($C_{2G}$), $\lambda i_{j,k}$ ist das Gewicht, das von der i-ten 2G-Zelle ($C_{2G}$) abhängt und wie folgt berechnet wird:

$$\lambda_{ij,k} = \frac{MS_{k,c_i}^{2G}}{V_{k,c_i}} E[V_k]$$

- Berechnen der Anzahl von Mobilstationen MS in dem geographischen Gebiet A, die von allen diesen 3G-Zellen ($C_{3G}$) bedient werden, mittels:

$$MS_{k,C_i} \cong MS_{k,c_i}^{2G} \cdot \left( 1 + \sum_{j=1}^{z} \delta_{u_j c_i} \frac{V_{k,u_j}}{V_{k,c_i}} \right)$$

7. System zum Schätzen der Anzahl von Mobilstationen (MS) in einem geographischen Gebiet A, umfassend:

- mindestens eine 2G-Basisstation ($BTS_{2G}$), die geeignet ist, auf der 2G-Technologie basierende Funksignale in einer 2G-Zelle ($C_{2G}$) des geographischen Gebiets A an eine Vielzahl von Mobilstationen (MS) zu senden bzw. von ihr zu empfangen,
- eine Basisstations-Steuereinrichtung (BSC), die eingerichtet ist, um die mindestens eine 2G-Basisstation ($BTS_{2G}$) zu steuern,
- eine Betriebs- und Wartungszentrale (OMC), die mit der Basisstations-Steuereinrichtung (BSC) verbunden und geeignet ist, in jedem Zeitintervall $T_k$ für jede 2G-Zelle ($C_{2G}$) mindestens einen Netzwerkbetriebsparameter $N_{M-OC}$, $N_{M-TC}$, $N_{SMS-MO}$, $N_{SMS-MT}$, $N_{LU}$, $N_{IHO}$ und $N_{OHO}$ zu speichern, der von jeder Mobilstation (MS) generiert wird, die in dem Zeitintervall $T_k$ von zumindest der 2G-Basisstation ($BTS_{2G}$) bedient wird,
- Verarbeitungsmittel (10), die mit der Betriebs- und Wartungszentrale (OMC) verbunden sind, um den mindestens einen Netzwerkbetriebsparameter $N_{M-OC}$, $N_{M-TC}$, $N_{SMS-MO}$, $N_{SMS-MT}$, $N_{LU}$, $N_{IHO}$ und $N_{OHO}$ zu verarbeiten, und die geeignet sind, die Anzahl von Mobilstationen (MS) zu schätzen, die im Zeitintervall $T_k$ von der mindestens einen 2G-Basisstation ($BTS_{2G}$) bedient werden,

**dadurch gekennzeichnet, dass** die Verarbeitungsmittel (10) geeignet sind, den Wert der Wahrscheinlichkeit festzulegen, dass jede Mobilstation (MS) die folgenden Netzwerkbetriebsparameter generiert, und für jede 2G-Basisstation ($BTS_{2G}$) diese Parameter zu speichern: die Gesamtzahl der abgehenden Anrufe $N_{M-OC}$, die Gesamtzahl der ankommenden Anrufe $N_{M-TC}$, die Gesamtzahl der abgehenden SMS-Nachrichten $N_{SMS-MO}$, die Gesamtzahl der ankommenden SMS-Nachrichten $N_{SMS-MT}$, die Gesamtzahl der Location Updates $N_{LU}$, die Gesamtzahl der hereinkommenden Verbindungsübergaben $N_{IHO}$ und die Gesamtzahl der herausgehenden Verbindungsübergaben $N_{OHO}$, wobei diese Verarbeitungsmittel geeignet sind, die generierten Netzwerkbetriebsparameter $N_{M-OC}$, $N_{M-TC}$, $N_{SMS-MO}$, $N_{SMS-MT}$, $N_{LU}$, $N_{IHO}$ und $N_{OHO}$ mit dem entsprechenden Wert der Wahrscheinlichkeit zu multiplizieren, dass jede Mobilstation (MS) diese Netzwerkbetriebsparameter $N_{M-OC}$, $N_{M-TC}$, $N_{SMS-MO}$, $N_{SMS-MT}$, $N_{LU}$, $N_{IHO}$ und $N_{OHO}$ generiert, und wobei sie geeignet sind, die Anzahl der in dem geographischen Gebiet A im Zeitintervall $T_k$ vorhandenen Mobilstationen (MS) mittels folgender Beziehung zu bestimmen:

$$MS_{k,C} = f(N_{M-OC_{k,C}}, N_{M-TC_{k,C}}, N_{SMS-MO_{k,C}}, N_{SMS-MT_{k,C}}, N_{IM_{k,C}})$$

wobei gilt:

$$N_{IM_{k,C}} \cong \sigma_{k-1} \cdot N_{IM,k-1} + N_{LU,k} + N_{IHO,k} - N_{OHO,k} - N_{CL,k}$$

wobei $N_{IMk,C}$ für die Anzahl von Mobilstationen im Leerlaufmodus in dieser 2G-Zelle des geographischen Gebiets A steht, $\sigma$ für den Wahrscheinlichkeitsparameter steht, der proportional zur Menge von Teilnehmern im Leerlaufmodus IM ist, $N_{LU,k}$ für die Anzahl der generierten Location Updates steht, $N_{IHO,k}$ für die Anzahl von hereinkommenden Verbindungsübergaben steht, $N_{OHO,k}$ für die Anzahl von herausgehenden Verbindungsübergaben steht und $N_{CL,k}$ für die Anzahl der Aufforderungen zum Löschen der Teilnehmerdaten steht.

8. System nach Anspruch 7, **dadurch gekennzeichnet, dass** die Verarbeitungsmittel geeignet sind, die Anzahl von Mobilstationen (MS) durch Verarbeiten der folgenden Beziehung zu bestimmen:

$$MS_{k,C} \approx p_{M-OC,i}(k) \cdot \left[ \sum_{i=1}^{n} p_{M-OC,i}(k) \right]^{-1} \cdot N_{M-OC_{k,C}} + p_{M-TC,i}(k) \cdot \left[ \sum_{i=1}^{m} p_{M-TC,i}(k) \right]^{-1} \cdot N_{M-TC_{k,C}}$$

$$+ p_{SMS-MO,i}(k) \cdot \left[ \sum_{i=1}^{s} p_{SMS-MO,i}(k) \right]^{-1} \cdot N_{SMS-MO_{k,C}} + p_{SMS-MT,i}(k) \cdot \left[ \sum_{i=2}^{w} p_{SMS-MT,i}(k) \right]^{-1} \cdot N_{SMS-MT_{k,C}}$$

$$+ p_0(k) \cdot \frac{N_{IM_{k,C}}}{p_0(k)},$$

wobei $P_{M-OC,i}(k)$ für die Wahrscheinlichkeit steht, dass ein Teilnehmer mindestens i Anrufe im Zeitintervall $T_k$ absetzt, $P_{M-TC,i}(k)$ für die Wahrscheinlichkeit steht, dass ein Teilnehmer mindestens i Anrufe im Zeitintervall $T_k$ empfängt, $P_{SMS-MO,i}(k)$ für die Wahrscheinlichkeit steht, dass ein Teilnehmer mindestens i SMS-Nachrichten im Zeitintervall $T_k$ absetzt, $P_{SMS-MT,i}(k)$ für die Wahrscheinlichkeit steht, dass ein Teilnehmer mindestens i SMS-Nachrichten im Zeitintervall $T_k$ empfängt, und $P_0(k)$ für die Wahrscheinlichkeit steht, dass ein Teilnehmer im Zeitintervall $T_k$ im Leerlaufmodus IM ist.

9. System nach Anspruch 7 oder 8, **dadurch gekennzeichnet, dass** es Folgendes umfasst:

  - einen Kartierungsdienst (WP), der die geographischen Koordinaten enthält, die den Funkversorgungsbereich von jeder 2G-Basisstation ($BTS_{2G}$) angeben, die in dem Gebiet installiert ist,
  - zweite Verarbeitungsmittel (11), die geeignet sind, zum Zweck der graphischen Darstellung der Verteilung der Mobilstationen (MS) in einer geographischen Karte die Werte der geographischen Koordinaten der 2G-Zelle ($C_{2G}$), die von jeder 2G-Basisstation ($BTS_{2G}$) bedient wird, mit mindestens einem Wert des Location Update LU zu verarbeiten, der mit der Mobilstation (MS) verknüpft ist.

**Revendications**

1. Procédé pour estimer le nombre de stations mobiles (MS) dans une zone géographique A dans l'intervalle de temps $T_K$, comprenant les étapes suivantes :

   - la réception d'au moins un paramètre de fonctionnement de réseau $N_{M-OC}$, $N_{M-TC}$, $N_{SMS-MO}$, $N_{SMS-MT}$, $N_{LU}$, $N_{IHO}$, $N_{OHO}$ généré par chaque station mobile (MS) desservie dans un intervalle de temps $T_K$ par au moins une station émettrice-réceptrice de base 2G ($BTS_{2G}$), ladite au moins une station émettrice-réceptrice de base 2G ($BTS_{2G}$) étant adaptée pour émettre/recevoir des signaux radio de technologie 2G dans une cellule 2G ($C_{2G}$) de la zone géographique A,
   - le traitement des paramètres de fonctionnement de réseau générés par chaque station mobile de manière à estimer le nombre de stations mobiles (MS) desservies dans l'intervalle de temps $T_K$ par l'au moins une station émettrice-réceptrice de base 2G ($BTS_{2G}$),

   ledit procédé étant **caractérisé en ce que** :

   - ladite étape de réception d'au moins un paramètre de fonctionnement de réseau comprend l'étape de stockage pour chaque station émettrice-réceptrice de base 2G ($BTS_{2G}$) des paramètres de fonctionnement de réseau suivants : le nombre total d'appels émis $N_{M-OC}$, le nombre total d'appels reçus $N_{M-TC}$, le nombre total de SMS envoyés $N_{SMS-MO}$, le nombre total de SMS reçus $N_{SMS-MT}$, le nombre total de mises à jour de localisation $N_{LU}$, le nombre total de transferts d'entrée $N_{IHO}$, et le nombre total de transferts de sortie $N_{OHO}$ ;
   - ladite étape de traitement des paramètres de fonctionnement de réseau $N_{M-OC}$, $N_{M-TC}$, $N_{SMS-MO}$, $N_{SMS-MT}$, $N_{LU}$, $N_{IHO}$, $N_{OHO}$ comprend les étapes suivantes :
   - le réglage d'une valeur de probabilité que chaque station mobile (MS) génère lesdits paramètres de fonctionnement de réseau $N_{M-OC}$, $N_{M-TC}$, $N_{SMS-MO}$, $N_{SMS-MT}$, $N_{LU}$, $N_{IHO}$, $N_{OHO}$, et
   - la multiplication de chaque paramètre de fonctionnement de réseau $N_{M-OC}$, $N_{M-TC}$, $N_{SMS-MO}$, $N_{SMS-MT}$, $N_{LU}$, $N_{IHO}$, $N_{OHO}$ par la valeur de probabilité correspondante ; et
   - le calcul du nombre de stations mobiles (MS) en mode inactif IM dans ladite zone géographique au moyen de la relation suivante :

$$N_{IM_{k,C}} \cong \sigma_{k-1} \cdot N_{IM,k-1} + N_{LU,k} + N_{IHO,k} - N_{OHO,k} - N_{CL,k}$$

   où $N_{IMk,C}$ représente le nombre de stations mobiles en mode inactif dans la cellule 2G ($C_{2G}$) de la zone géographique A, $\sigma$ représente le paramètre de probabilité proportionnel à la quantité d'utilisateurs en mode inactif IM, $N_{LU,k}$ représente le nombre de mises à jour de localisation, générées, $N_{IHO,k}$ représente le nombre de transferts d'entrée, $N_{OHO,k}$ représente le nombre de transferts de sortie et $N_{CL,k}$ représente le nombre de localisations d'annulation.

2. Procédé selon l'une quelconque des revendications 1, **caractérisé en ce que** l'étape de traitement des paramètres de fonctionnement de réseau $N_{M-OC}$, $N_{M-TC}$, $N_{SMS-MO}$, $N_{SMS-MT}$, $N_{LU}$, $N_{IHO}$, $N_{OHO}$ est exécutée au moyen de la relation suivante :

$$MS_{k,C} \approx p_{M-OC,i}(k) \cdot \left[ \sum_{i=1}^{n} p_{M-OC,i}(k) \right]^{-1} \cdot N_{M-OC_{k,C}} + p_{M-TC,i}(k) \cdot \left[ \sum_{i=1}^{m} p_{M-TC,i}(k) \right]^{-1} \cdot N_{M-TC_{k,C}}$$

$$+ p_{SMS-MO,i}(k) \cdot \left[ \sum_{i=1}^{s} p_{SMS-MO,i}(k) \right]^{-1} \cdot N_{SMS-MO_{k,C}} + p_{SMS-MT,i}(k) \cdot \left[ \sum_{i=2}^{w} p_{SMS-MT,i}(k) \right]^{-1} \cdot N_{SMS-MT_{k,C}}$$

$$+ p_0(k) \cdot \frac{N_{IM_{k,C}}}{p_0(k)},$$

où $p_{M-OC,i}(k)$ est la probabilité qu'un utilisateur émette au moins i appels dans l'intervalle de temps $T_K$, $p_{M-TC,i}(k)$ est la probabilité qu'un utilisateur reçoive au moins i appels dans l'intervalle de temps $T_K$, $P_{SMS-MO,i(k)}$ est la probabilité qu'un utilisateur envoie au moins i SMS dans l'intervalle de temps $T_K$, $p_{SMS-MT,i(k)}$ est la probabilité qu'un utilisateur reçoive au moins i SMS dans l'intervalle de temps $T_K$ et $p_0(k)$ est la probabilité qu'un utilisateur soit en mode inactif IM dans l'intervalle de temps $T_K$.

**3.** Procédé selon la revendication 2, **caractérisé en ce que** l'étape de traitement des paramètres de fonctionnement de réseau $N_{M-OC}$, $N_{M-TC}$, $N_{SMS-MO}$, $N_{SMS-MT}$, $N_{LU}$, $N_{IHO}$, $N_{OHO}$ est exécutée au moyen de la relation suivante :

$$MS_{k,C} \approx \dot{E}[p_{M-OC,i}(k)] \cdot \left[\sum_{i=1}^{n} \dot{E}[p_{M-OC,i}(k)]\right]^{-1} \cdot N_{M-OC_{k,C}} + \dot{E}[p_{M-TC,i}(k)] \cdot \left[\sum_{i=1}^{m} \dot{E}[p_{M-TC,i}(k)]\right]^{-1} \cdot N_{MTC_{k,C}}$$

$$+ \dot{E}[p_{MO-SMS,i}(k)] \cdot \left[\sum_{i=1}^{h} \dot{E}[p_{MO-SMS,i}(k)]\right]^{-1} \cdot N_{MO-SMS_{k,C}} + \dot{E}[p_{MT-SMS,i}(k)] \cdot \left[\sum_{i=1}^{h} \dot{E}[p_{MT-SMS,i}(k)]\right]^{-1} \cdot N_{MT-SMS_{k,C}}$$

$$+ \dot{E}[p_0(k)] \cdot \frac{N_{I_{k,C}}}{\dot{E}[p_0(k)]},$$

où $\dot{E}[p_{M-OC,i}(k)]$ correspond à la valeur moyenne de la probabilité qu'un utilisateur émette au moins i appels dans l'intervalle de temps $T_K$, $\dot{E}[p_{M-TC,i}(k)]$ correspond à la valeur moyenne de la probabilité qu'un utilisateur reçoive au moins i appels dans l'intervalle de temps $T_K$, $\dot{E}[p_{SMS-MO,i}(k)]$ correspond à la valeur moyenne de la probabilité qu'un utilisateur envoie au moins i SMS dans l'intervalle de temps $T_K$, $\dot{E}[p_{SMS-MT,i}(k)]$ correspond à la valeur moyenne de la probabilité qu'un utilisateur reçoive au moins i SMS dans l'intervalle de temps $T_K$ et $\dot{E}[p_0(k)]$ correspond à la valeur moyenne de la probabilité qu'un utilisateur soit en mode inactif IM dans l'intervalle de temps $T_K$.

**4.** Procédé selon la revendication 3, **caractérisé en ce qu'**il comprend les étapes suivantes :

- l'utilisation d'un service de cartographie (WP) contenant les coordonnées géographiques de la cellule 2G ($C_{2G}$) desservie par chaque station émettrice-réceptrice de base 2G ($BTS_{2G}$),
- le traitement des valeurs des coordonnées géographiques de la cellule 2G ($C_{2G}$) desservie par chaque station émettrice-réceptrice de base 2G ($BTS_{2G}$) avec les valeurs de mise à jour de localisation LU associées aux stations mobiles (MS) dans le but de représenter géographiquement la distribution des stations mobiles (MS) sur une carte géographique.

**5.** Procédé selon l'une quelconque des revendications 1 à 3, **caractérisé en ce qu'**il comprend les étapes suivantes :

- la réception d'une valeur de l'intensité de trafic $V_{k,C}$[Erlang] qui est mesurée pour une cellule 3G ($C_{3G}$) de la zone géographique A dans l'intervalle de temps $T_K$ et qui est générée par chaque station mobile (MS) desservie par au moins une station émettrice-réceptrice de base 3G ($BTS_{3G}$), ladite station émettrice-réceptrice de base 3G ($BTS_{3G}$) étant adaptée pour émettre/recevoir des signaux radio 3G dans ladite cellule 3G ($C_{3G}$) de la zone géographique A,
- le calcul de la valeur statistique moyenne $\dot{E}(V_k)$ de l'intensité de trafic $V_{k,C}$,
- la division de la valeur de l'intensité de trafic $V_{k,C}$ par la valeur statistique moyenne $\dot{E}(V_k)$ de l'intensité de trafic $V_{k,C}$ dans le but de calculer le nombre de stations mobiles (MS) desservie par ladite station émettrice-réceptrice de base 3G ($BTS_{3G}$) dans ledit intervalle de temps $T_K$.

**6.** Procédé selon la revendication 5, **caractérisé en ce qu'**il comprend l'étape suivante :

- le calcul de l'ensemble de toutes les cellules 3G ($C_{3G}$) qui s'entrecoupent avec les cellules 2G ($C_{2G}$) dans ladite zone géographique A au moyen de la relation suivante :

$$MS_{k,C_i} \approx MS_{k,c_i}^{2G} + \sum_{j=1}^{z} \delta_{u_j c_i} MS_{k,u_j}^{3G} \cong MS_{k,c_i}^{2G} + \sum_{j=1}^{z} \delta_{u_j c_i} \lambda_{ij,k} \cdot \frac{V_{k,u_j}}{E[V_k]}$$

où : z est le nombre de cellules 3G ($C_{3G}$) qui s'entrecoupent avec l'ième cellule 2G ($C_{2G}$) et $\delta_{uj,ci}$ est le pourcentage de recouvrement entre la jème cellule 3G ($C_{3G}$) et l'ième cellule 2G ($C_{2G}$),
$\lambda_{ij,k}$ est le poids qui dépend de l'ième cellule 2G ($C_{2G}$) et est calculé comme

$$\lambda_{ij,k} = \frac{MS_{k,c_i}^{2G}}{V_{k,c_i}} E[V_k]$$

- le calcul du nombre de stations mobiles MS dans ladite zone géographique A qui sont desservies par toute ladite cellule 3G ($C_{3G}$) au moyen de :

$$MS_{k,C_i} \cong MS_{k,c_i}^{2G} \cdot \left( 1 + \sum_{j=1}^{z} \delta_{u_j c_i} \frac{V_{k,u_j}}{V_{k,c_i}} \right)$$

**7.** Système pour estimer le nombre de stations mobiles (MS) dans une zone géographique A dans l'intervalle de temps $T_K$, comprenant :

- au moins une station émettrice-réceptrice de base 2G ($BTS_{2G}$) étant adaptée pour émettre/recevoir des signaux radio de technologie 2G dans une cellule 2G ($C_{2G}$) de la zone géographique A vers une pluralité de stations mobiles (MS),
- un contrôleur de station de base (BSC) étant agencé pour commander l'au moins une station émettrice-réceptrice de base 2G ($BTS_{2G}$),
- un centre d'exploitation et de maintenance (OMC) connecté au contrôleur de station de base (BSC) et étant adapté pour stocker, à chaque intervalle de temps $T_K$, pour chaque cellule 2G ($C_{2G}$) , au moins un paramètre de fonctionnement de réseau $N_{M-OC}$, $N_{M-TC}$, $N_{SMS-MO}$, $N_{SMS-MT}$, $N_{LU}$, $N_{IHO}$, $N_{OHO}$ généré par chaque station mobile (MS) desservie dans l'intervalle de temps $T_K$ par au moins la station émettrice-réceptrice de base 2G ($BTS_{2G}$),
- des moyens de traitement (10) connectés au centre d'exploitation et de maintenance (OMC) de manière à traiter l'au moins un paramètre de fonctionnement de réseau $N_{M-OC}$, $N_{M-TC}$, $N_{SMS-MO}$, $N_{SMS-MT}$, $N_{LU}$, $N_{IHO}$, $N_{OHO}$ et adapté pour estimer le nombre de stations mobiles (MS) desservies dans l'intervalle de temps $T_K$ par l'au moins une station émettrice-réceptrice de base 2G ($BTS_{2G}$),

**caractérisé en ce que** les moyens de traitement (10) sont adaptés pour fixer la valeur de probabilité que chaque station mobile (MS) génère le paramètre de fonctionnement de réseau suivant et pour stocker pour chaque station émettrice-réceptrice de base 2G ($BTS_{2G}$) lesdits paramètres : le nombre total d'appels émis $N_{MOC}$, le nombre total d'appels reçus $N_{M-TC}$, le nombre total de SMS envoyés $N_{SMS-MO}$, le nombre total de SMS reçus $N_{SMSMT}$, le nombre total de mises à jour de localisation $N_{LU}$, le nombre total de transferts d'entrée $N_{IHO}$, le nombre total de transferts de sortie $N_{OHO}$ ; lesdits moyens de traitement sont adaptés pour multiplier les paramètres de fonctionnement de réseau générés $N_{M-OC}$, $N_{M-TC}$, $N_{SMS-MO}$, $N_{SMS-MT}$, $N_{LU}$, $N_{IHO}$, $N_{OHO}$ par la valeur de probabilité correspondante que chaque station mobile (MS) génère lesdits paramètres de fonctionnement de réseau $N_{M-OC}$. $N_{MTC}$, $N_{SMS-MO}$, $N_{SMS-MT}$, $N_{LU}$, $N_{IHO}$, $N_{OHO}$ et sont adaptés pour déterminer le nombre de stations mobiles (MS) présentes dans la zone géographique A dans l'intervalle de temps $T_K$ au moyen de la relation suivante :

$$MS_{k,C} = f(N_{M-OC_{k,C}}, N_{M-TC_{k,C}}, N_{SMS-MO_{k,C}}, N_{SMS-MT_{k,C}}, N_{IM_{k,C}})$$

dans lequel

$$N_{IM_{k,C}} \cong \sigma_{k-1} \cdot N_{IM,k-1} + N_{LU,k} + N_{IHO,k} - N_{OHO,k} - N_{CL,k}$$

où $N_{IMk,C}$ représente le nombre de stations mobiles (MS) en mode inactif dans ladite cellule 2G de la zone géographique A, $\sigma$ représente le paramètre de probabilité proportionnel à la quantité d'utilisateurs en mode inactif IM, $N_{LU,k}$ représente le nombre de mises à jour de localisation générées, $N_{IHO,k}$ représente le nombre de transferts d'entrée, $N_{OHO,k}$ représente le nombre de transferts de sortie et $N_{CL,k}$ représente le nombre de localisations d'annulation.

8. Système selon la revendication 7, **caractérisé en ce que** les moyens de traitement sont adaptés pour déterminer le nombre de stations mobiles (MS) en traitant la relation suivante :

$$MS_{k,C} \approx p_{M-OC,i}(k) \cdot \left[ \sum_{i=1}^{n} p_{M-OC,i}(k) \right]^{-1} \cdot N_{M-OC_{k,C}} + p_{M-TC,i}(k) \cdot \left[ \sum_{i=1}^{m} p_{M-TC,i}(k) \right]^{-1} \cdot N_{M-TC_{k,C}}$$

$$+ p_{SMS-MO,i}(k) \cdot \left[ \sum_{i=1}^{s} p_{SMS-MO,i}(k) \right]^{-1} \cdot N_{SMS-MO_{k,C}} + p_{SMS-MT,i}(k) \cdot \left[ \sum_{i=2}^{w} p_{SMS-MT,i}(k) \right]^{-1} \cdot N_{SMS-MT_{k,C}}$$

$$+ p_0(k) \cdot \frac{N_{IM_{k,C}}}{p_0(k)},$$

où $p_{M-OC,i}(k)$ est la probabilité qu'un utilisateur émette au moins i appels dans l'intervalle de temps $T_K$, $p_{MTC,i}(k)$ est la probabilité qu'un utilisateur reçoive au moins i appels dans l'intervalle de temps $T_K$, $P_{SMS-MO,i}(k)$ est la probabilité qu'un utilisateur envoie au moins i SMS dans l'intervalle de temps $T_K$, $p_{SMS-MT,i}(k)$ est la probabilité qu'un utilisateur reçoive au moins i SMS dans l'intervalle de temps $T_K$ et $p_0(k)$ est la probabilité qu'un utilisateur soit en mode inactif IM dans l'intervalle de temps $T_K$.

9. Système selon la revendication 7 ou la revendication 8, **caractérisé en ce qu'**il comprend :

- un service de cartographie (WP) contenant les coordonnées géographiques indiquant la zone de couverture de chaque station émettrice-réceptrice de base 2G ($BTS_{2G}$) installée dans la région,
- des deuxièmes moyens de traitement (11) étant adaptés pour traiter les valeurs des coordonnées géographiques de la cellule 2G ($C_{2G}$) desservie par chaque station émettrice-réceptrice de base 2G ($BTS_{2G}$) avec au moins une valeur de mise à jour de localisation LU associée à la station mobile (MS) dans le but de représenter géographiquement la distribution des stations mobiles (MS) sur une carte géographique.

Fig.1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2392348 A
- WO 2006079252 A
- WO 2010090570 A1
- EP 1377094 A1